(19) Europäisches Patentamt / European Patent Office / Office européen des brevets

(11) **EP 3 832 439 A2**

(12) # EUROPEAN PATENT APPLICATION

(43) Date of publication:
**09.06.2021 Bulletin 2021/23**

(51) Int Cl.:
**G06F 3/01** *(2006.01)*    **G06F 3/03** *(2006.01)*
**G06F 3/0485** *(2013.01)*

(21) Application number: **21155718.6**

(22) Date of filing: **08.02.2021**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
**KH MA MD TN**

(30) Priority: **14.02.2020  CN 202010095286**

(71) Applicant: **BEIJING BAIDU NETCOM SCIENCE
TECHNOLOGY CO., LTD.
No.10 Shangdi 10th Street
Haidian District
Beijing 100085 (CN)**

(72) Inventors:
• **WANG, Yipeng**
  **Haidian District, Beijing (CN)**
• **LI, Yuanhang**
  **Haidian District, Beijing (CN)**
• **ZHAO, Weisong**
  **Haidian District, Beijing (CN)**
• **YUN, Ting**
  **Haidian District, Beijing (CN)**
• **CHEN, Guoqing**
  **Haidian District, Beijing (CN)**
• **LI, Youjiang**
  **Haidian District, Beijing (CN)**
• **YAN, Qingyun**
  **Haidian District, Beijing (CN)**

(74) Representative: **Poskett, Oliver James et al
Maucher Jenkins
26 Caxton Street
London SW1H 0RJ (GB)**

(54) **METHOD AND APPARATUS FOR CONTROLLING ELECTRONIC DEVICE BASED ON GESTURE**

(57)    Embodiments of the present application provide a method and an apparatus for controlling an electronic device based on a gesture, which relates to intelligent terminal technologies. The specific implementation solution is as follows: acquiring continuous N frames of first gesture images, and controlling a first object displayed on a screen according to the N frames of first gesture images, where N is an integer greater than 1; acquiring at least one frame of gesture image, where the at least one frame of gesture image and part of the gesture images in the N frames of first gesture images constitute continuous N frames of second gesture images, and the acquiring time of the at least one frame of gesture image is after the acquiring time of the N frames of first gesture images; and continuing to control the first object displayed on the screen according to the N frames of second gesture images. The embodiments of the present application can achieve that the user continuously controls the electronic device through gestures.

Acquiring consecutive N frames of first gesture images, and controlling a first object displayed on a screen according to the N frames of first gesture images — S201

Acquiring at least one frame of gesture image, where the at least one frame of gesture image and part of the gesture images in the N frames of first gesture images constitute continuous N frames of second gesture images, and the acquiring time of at least one frame of gesture image is after the acquiring time of the N frames of first gesture images — S202

Continuing to control the first object displayed on the screen according to the N frames of second gesture images — S203

FIG. 2

EP 3 832 439 A2

**Description**

**TECHNICAL FILED**

Embodiments of the present application relate to image processing technologies and, in particular, to intelligent terminal technologies.

**BACKGROUND**

At present, a user can control an electronic device by making a gesture without touching the electronic device, which greatly facilitates the user's control of the electronic device and also improves the efficiency of the user in operating the electronic device.

At present, a control method of an electronic device based on gesture recognition is generally that a gesture corresponds to a command, for example, the gesture of drawing a "C" corresponds to a command to open a camera, or user's single-finger sliding corresponds to a page movement command. When detecting the user's single-finger sliding gesture, the electronic device controls a current page to move a preset distance. It can be known that, at present, the control of an electronic device through a dynamic gesture is relatively macro and not refined enough.

**SUMMARY**

Embodiments of the present application provide a method and an apparatus for controlling an electronic device based on a gesture, which can achieve a purpose of finely controlling the electronic device through dynamic gestures.

In a first aspect, an embodiment of the present application provides a method for controlling an electronic device based on a gesture, which includes: acquiring consecutive N frames of first gesture images, and controlling a first object displayed on a screen according to the N frames of first gesture images, where N is an integer greater than 1; acquiring at least one frame of gesture image; where the at least one frame of gesture image and part of the gesture images in the N frames of first gesture images constitute continuous N frames of second gesture images, and acquiring time of the at least one frame of gesture image is after the acquiring time of the N frames of first gesture images; and continuing to control the first object displayed on the screen according to the N frames of second gesture images.

In this solution, in a current process of controlling the electronic device through dynamic gestures, the first object is controlled once after a small number of gesture images are captured, and the gesture images based on which the first object is controlled in two adjacent times have a same gesture image, which achieves the purpose of finely controlling the electronic device through dynamic gestures.

In a possible implementation manner, the controlling a first object displayed on a screen according to the N frames of first gesture images includes: identifying a gesture as a first dynamic gesture according to the N frames of first gesture images; determining a first control information of the first object according to part of the gesture images in the N frames of first gesture images; and executing a first instruction corresponding to the first dynamic gesture to control the first object according to the first control information.

The first control information may be a moving distance of the first object or a size change value of the first object. In this solution, the control information of the first object is not preset, but is obtained according to part of the gesture images in the N frames of first gesture images. On the basis of implementing fine control of the electronic device through a gesture, the control of the electronic device can be made more in line with needs of the user, and user's experience is improved.

In a possible implementation manner, the determining a first control information of the first object according to the part of the gesture images in the N frames of first gesture images includes: determining the first control information according to a change value of a hand key point position corresponding to a second target gesture image relative to a hand key point position corresponding to a first target gesture image; where the second target gesture image is a last acquired gesture image in the N frames of first gesture images, and the first target gesture image is a frame of gesture image acquired most recently before the second target gesture image is acquired.

A specific implementation of determining the control information of the first object is given in this solution.

In a possible implementation manner, the determining the first control information according to a change value of a hand key point position corresponding to a second target gesture image relative to a hand key point position corresponding to a first target gesture image includes: determining the first control information according to the change value of the hand key point position corresponding to the second target gesture image relative to the hand key point position corresponding to the first target gesture image and the first dynamic gesture.

Another specific implementation of determining the control information of the first object is given in this solution. In this solution, the type of the gesture is also considered when determining the control information of the first object, which can achieve the purpose that multiple gestures correspond to the same instructions and different gestures of the multiple gestures correspond to the control of different degrees of the first object. For example, palm sliding can control fast page sliding, and two-finger sliding can control slow page sliding.

In a possible implementation manner, before the determining the first control information according to a change value of a hand key point position corresponding to a second target gesture image relative to a hand key point position corresponding to a first target gesture image, the method further includes: using a first machine learning model to learn the first gesture image; and acquiring an output of the first machine learning model, where the output includes a hand key point coordinate corresponding to the first gesture image.

In this solution, the hand key point coordinate can be directly acquired after learning the gesture image according to the first machine learning. Compared with the solution of firstly using the detection on hand model to detect whether there is a hand in the image, if there is a hand, the hand image in the image is segmented, and then the key point detection model is used to detect the key points of the hand corresponding to the segmented hand image, The efficiency and accuracy of acquiring the hand key points coordinates can be improved, and then the user's control efficiency of the electronic device through a gesture can be also higher.

In a possible implementation manner, the executing a first instruction corresponding to the first dynamic gesture to control the first object according to the first control information includes: obtaining new control information of the first object according to the first control information and first historical control information, where the first historical control information is control information based on which the first object was last controlled in a current control process of the first object; and executing the first instruction to control the first object according to the new control information.

This solution can make the change of the first object more smoothly in the process of controlling the first object.

In a possible implementation manner, the first dynamic gesture is single-finger sliding to a first direction, the first instruction is moving the first object in the first direction, and the first object is a positioning mark; and executing the first instruction to control the first object according to the first control information, which includes: controlling the positioning mark to move the first moving distance in the first direction.

In a possible implementation, the first dynamic gesture is a two-finger sliding to a first direction, the first instruction is to moving the first object in the first direction, and the first object is a first page; and executing the first instruction to control the first object according to the first control information, which includes: controlling the first page to move the first moving distance in the first direction.

In a possible implementation, the first dynamic gesture is sliding a palm to a first direction, and the first instruction is moving the first object in the first direction, and the first object is a first page; and the executing the first instruction to control the first object according to the first control information includes: controlling the first page to move the first moving distance in the first direction.

In a possible implementation manner, the first dynamic gesture is gradually spreading out two fingers, and the first instruction is enlarging the first object; and the executing the first instruction to control the first object according to the first control information includes: enlarging a size of the first object by the size change value.

In a possible implementation manner, the first dynamic gesture is pinching two fingers, and the first instruction is reducing the first object; and the executing the first instruction to control the first object according to the first control information includes: reducing the size of the first object by the size change value.

In a second aspect, an embodiment of the present application provides an apparatus for controlling an electronic device based on a gesture. The apparatus includes: an acquiring module, configured to acquire consecutive N frames of first gesture images; where N is an integer greater than 1; a control module, configured to control a first object displayed on a screen according to the N frames of first gesture images; the acquiring module is further configured to acquire at least one frame of gesture image; where the at least one frame of gesture image and part of the gesture images in the N frames of first gesture images constitute continuous N frames of second gesture images, where acquiring time of the at least one frame of gesture image is after the acquiring time of the N frames of first gesture images; and the control module, further configured to continue control the first object displayed on the screen according to the N frames of second gesture images.

In a possible implementation manner, the control module is specifically configured to: identify a gesture as a first dynamic gesture according to the N frames of first gesture images; determine a first control information of the first object according to part of the gesture images in the N frames of first gesture images; and execute a first instruction corresponding to the first dynamic gesture to control the first object according to the first control information.

In a possible implementation manner, the control module is specifically configured to: determine the first control information according to a change value of ta hand key point position corresponding to a second target gesture image relative to a hand key point position corresponding to a first target gesture image; where the second target gesture image is a last acquired gesture images in the N frames of first gesture images, and the first target gesture image is the frame of gesture image acquired most recently before the second target gesture image is acquired.

In a possible implementation manner, the control module is specifically configured to: determine the first control information according to the change value of the hand key point position corresponding to the second target gesture image relative to the hand key point position corresponding to the first target gesture image and the first dynamic gesture.

In a possible implementation manner, before the control module determines the first control information according to a change value of a hand key point position corresponding to a second target gesture image relative to a hand key point position corresponding to a first target gesture image, the acquiring module is further configured to: use a first machine learning model to learn the first gesture image; and acquire an output of the first machine learning model, where the output includes a hand key point coordinate corresponding to the first gesture image.

In a possible implementation manner, the control module is specifically configured to: obtain new control information of the first object according to the first control information and first historical control information, where the first historical control information is control information based on which the first object is last controlled in a current control process of the first object; and execute the first instruction to control the first object according to the new control information.

In a possible implementation manner, the first control information is a first moving distance.

In a possible implementation manner, the first dynamic gesture is single-finger sliding to a first direction, the first instruction is moving the first object in the first direction, and the first object is a positioning mark; and the control module is specifically configured to: control the positioning mark to move the first moving distance in the first direction.

In a possible implementation, the first dynamic gesture is two-finger sliding to a first direction, and the first instruction is moving the first object in the first direction, and the first object is the first page; and the control module is specifically configured to: control the first page to move the first moving distance in the first direction.

In a possible implementation, the first dynamic gesture is palm sliding to a first direction, the first instruction is moving the first object in the first direction, and the first object is a first page; and the control module is specifically configured to: control the first page to move the first moving distance in the first direction.

In a possible implementation manner, the first control information is a size change value.

In a possible implementation manner, the first dynamic gesture is gradually spreading out two fingers, and the first instruction is enlarging the first object; and the control module is specifically configured to: enlarge a size of the first object by the size change value.

In a possible implementation manner, the first dynamic gesture is pinching two fingers, and the first instruction is reducing the first object; and the control module is specifically configured to: reduce the size of the first object by the size change value.

In a third aspect, an embodiment of the present application provides an electronic device which includes: at least one processor; and a memory communicatively connected with the at least one processor; where the memory stores instructions executable by the at least one processor, and the instructions are executed by the at least one processor to enable the at least one processor to execute the method according to the first aspect and any possible implementation manner of the first aspect.

In a fourth aspect, the present application provides a non-transitory computer-readable storage medium storing computer instructions, where the computer instructions are used to cause a computer to execute the method according to the first aspect and any possible implementation manner of the first aspect.

In a fifth aspect, the present application provides a computer program product, where the program product includes: a computer program, the computer program is stored in a readable storage medium, at least one processor of an electronic device can read the computer program from the readable storage medium, and the at least one processor executes the computer program such that the electronic device executes the method described in the first aspect.

The above embodiment of the present application has the following advantages or beneficial effects: the purpose of finely controlling the electronic device through dynamic gestures can be achieved. Since through the technical method that, in a current control process of controlling the electronic device through the dynamic gestures, the first object can be controlled once after a small number of gesture images are captured, and the gesture images based on which the first object is controlled in two adjacent times have the same gesture image, the macro technical problem of the user's control of the electronic device through the dynamic gesture in the prior art is overcome, and the technical effect of fine control of the electronic device through the dynamic gestures is ensured.

All other effects of the above-mentioned optional methods will be described below in combination with specific embodiments.

**BRIEF DESCRIPTION OF THE DRAWINGS**

Drawings are used for a better understanding of the solution and do not constitute a limitation of the present application. Where:

FIG. 1 is an interface interaction diagram corresponding to a current fine control of an electronic device;
FIG. 2 is a first flowchart of a method for controlling an electronic device based on a gesture provided by an embodiment of the present application;
FIG. 3 is a schematic diagram of acquiring a gesture image provided by an embodiment of the present application;
FIG. 4 is a first schematic diagram of interface interaction provided by an embodiment of the present application;

FIG. 5 is a second schematic diagram of interface interaction provided by an embodiment of the present application;

FIG. 6 is a third schematic diagram of interface interaction provided by an embodiment of the present application;

FIG. 7 is a fourth schematic diagram of interface interaction provided by an embodiment of the present application;

FIG. 8 is a fifth schematic diagram of interface interaction provided by an embodiment of the present application;

FIG. 9 is a schematic structural diagram of an apparatus for controlling an electronic device based on a gesture provided by an embodiment of the present application; and

FIG. 10 is a block diagram of an electronic device used to implement the method for controlling an electronic device based on a gesture according to an embodiment of the present application.

## DESCRIPTION OF EMBODIMENTS

The following describes the exemplary embodiments of the present application in combination with the drawings, which includes various details of the embodiments of the present application for the sake of understanding, which should be considered as merely exemplary. Therefore, those of ordinary skilled in the art should recognize that various changes and modifications can be made to the embodiments described herein without departing from the scope and spirit of the present application. Similarly, for the sake of clarity and conciseness, the description of well-known functions and structures is omitted in the following description.

In the present application, "at least one" refers to one or more, and "multiple" refers to two or more. "And/or" describes an association relationship of associated objects, which indicates that there can be three relationships, for example, A and/or B can mean: A exists alone, A and B exist at the same time, and B exists alone, where A and B can be singular or plural, respectively. The character "/" generally represents that the associated objects are in an "or" relationship. "The following at least one (item)" or similar expressions refers to any combination of these items, which includes any combination of single (item) or plural (items). For example, at least one (item) of a, b, and c can represent: a, b, c, a-b, a-c, b-c, or a-b-c, where a, b, and c can be single or multiple, respectively. The terms "first", "second", etc. in the present application are used to distinguish similar objects, and are not necessarily used to describe a specific sequence or a precedence order.

At present, a user can control an electronic device through static and dynamic gestures.

For static gestures: for example, if the user makes an "OK" gesture, the electronic device determines that the user has made the static gesture of "OK" and determines that the control object corresponding to the "OK" gesture is a picture displayed on the screen according to the gesture image collected by the camera. Then the electronic device executes a saving control object command corresponding to the "OK" gesture, and the electronic device saves the picture.

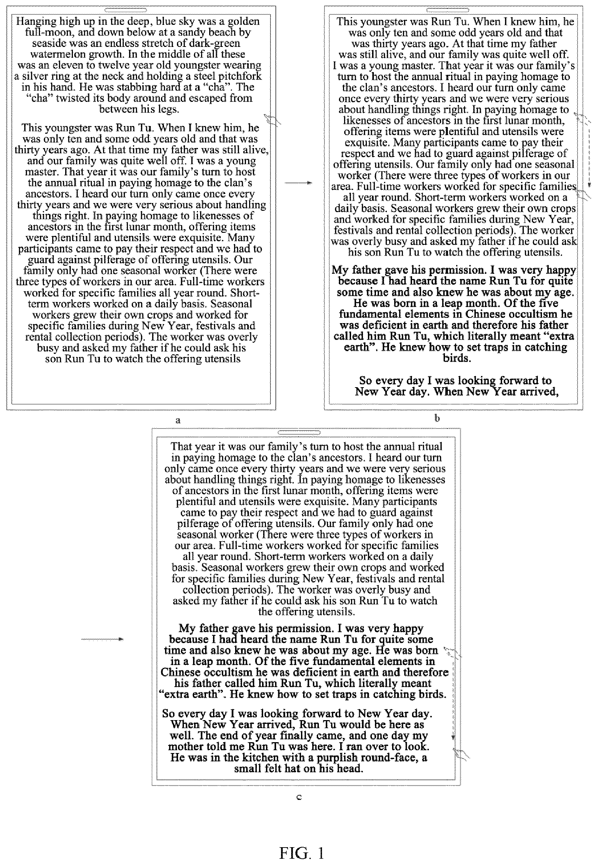

For dynamic gestures: for example, if the user draws an M, the electronic device determines that the user makes the gesture of drawing an M according to the gesture image collected by the camera, and the electronic device performs an operation of opening wechat corresponding to the gesture of drawing an M. Another example is that the user makes a single point down sliding gesture. The electronic device determines that the user makes the single point down sliding gesture according to the gesture image collected by the camera. The electronic device executes the command of moving the page down corresponding to the single point down sliding gesture, and controls the page to move down a preset distance. It can be seen that every time a user makes a dynamic gesture, it corresponds to a relatively macro control of the electronic device. In many scenes, the electronic devices need to be control finely, such as gradually moving the page, gradually enlarging the image and so on. At present, the method to achieve a fine control of the electronic device is generally that the user's hand gradually moves on the display screen of the electronic device. According to a capacitance change of the display screen, the electronic device determines a touch track of the hand in real time and executes the instructions corresponding to the touch track to achieve the fine control of the electronic device. At present, the interface interaction diagram corresponding to the method of achieving fine control of the electronic device can be shown in FIG. 1. As shown in FIG. 1, a finger of the hand touches the screen. The hand moves downward, and gradually slides from the position of figure (a) in FIG. 1 to the position of figure (b). The currently displayed page slides down, and the content displayed on the page is updated from the content shown in figure (a) in FIG. 1 to the content shown in figure (b). The hand continues to move downward, and the hand slides from the position of figure (b) in FIG. 1 to the position of figure (c) gradually. The currently displayed page slides downward, and the content displayed on the page is updated from the content shown in figure (b) in FIG. 1 to the content shown in figure (c).

When the electronic device is controlled by dynamic gestures, multiple gesture images are obtained, and the capacitance of the display screen does not change. And it is impossible to determine the hand touch track according to the capacitance change of the display screen in real time and execute the command corresponding to the touch track to achieve the fine control of the electronic device. The inventor found that: in the current control process of electronic device through dynamic gestures, after a small number of gesture images are captured, the first object can be controlled once. If the gesture images based on which the first object is controlled in two adjacent times have the same gesture image, the purpose of a fine control of the electronic device can be achieved.

The method for controlling an electronic device based on a gesture provided by the present application will be described with specific embodiments.

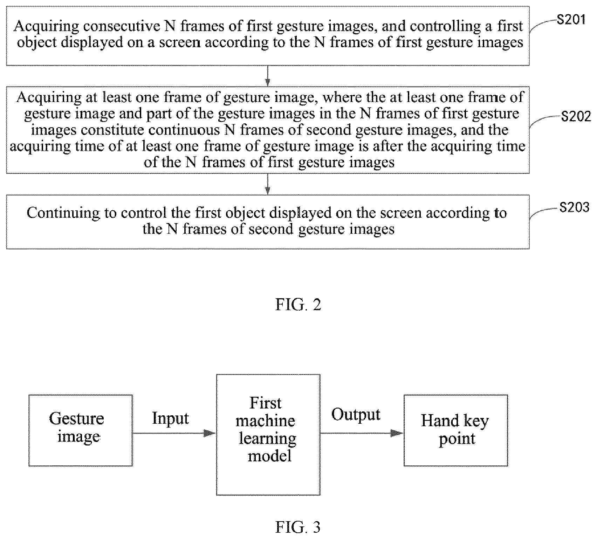

FIG. 2 is a first flowchart of a method for controlling an electronic device based on a gesture provided by the embodiment of the present application, and the executive body of the embodiment is an electronic device. Referring to FIG. 2, the method of this embodiment includes:

Step S201, acquiring consecutive N frames of first gesture images, and controlling a first object displayed on a screen according to the N frames of first gesture images, where N is an integer greater than 1.

Where the electronic device is equipped with a camera which can capture multiple images per second, such as 10 frames. For each captured image, the electronic device determines whether the image is a gesture image which is an image including a hand. Where the captured image and the acquired image in the embodiment of the present application have the same meaning.

In a specific implementation, the method for the electronic device to determine whether the image is a gesture image is as follows: the first machine learning model is used to learn the image and the output of the first machine learning model is acquired. The output includes the probability of the hand included in the image. If the output indicates that the probability of the hand included in the image is lower than the first preset probability, it is determined that the image is not a gesture image. If the output indicates that the probability of the hand included in the image is greater than the second preset probability, it is determined that the image is a gesture image. In addition, if the output indicates that the probability of the hand included in the image is greater than the second preset probability, the output also includes the hand key point coordinates. That is to say, for a gesture image: the first machine learning model is used to learn the gesture image to acquire the output of the first machine learning model, and the output includes the hand key point coordinates corresponding to the gesture image. As shown in FIG. 3, the gesture image is input to the first machine learning model, and the output includes the hand key point coordinates corresponding to the gesture image.

In this embodiment, after the gesture image is learned according to the first machine learning, the hand key point coordinates can be acquired directly. Compared with the solution of first using the detection of the hand model to detect whether there is a hand in the image, if there is a hand, the hand image in the image is segmented, and then the key point detection model is used to detect the key points of the hand corresponding to the segmented hand image, the efficiency and the accuracy of acquiring the hand key point coordinates can be improved, and then the control efficiency of the electronic device by the user through a gesture can be also higher.

After acquiring N consecutive first gesture images, the electronic device controls the first object displayed on the screen according to the N first gesture images. N is an integer greater than 1. Optionally, N can be any integer in an interval [4, 10]. Where the consecutive N frames of first gesture images refer to the N frames of first gesture images captured by the camera in chronological order, that is, for any two frames of first gesture images that are adjacent in capture time among the N frames of first gesture images, the camera does not capture other gesture images during the time when the two frames of first gesture images were captured.

For example: the camera captures images 1-7 in turn, image 1 and image 2 are not gesture images, and image 3, image 4, image 5, image 6 and image 7 are gesture images, then image 3 and image 4 are consecutive two frames of gesture images, images 4-6 are consecutive three frames of gesture images, and image 3-7 are consecutive five frames of gesture images.

The following describes the specific implementation of controlling the first object displayed on the screen according to the N frames of first gesture images.

In one specific implementation, the controlling a first object displayed on a screen according to the N frames of first gesture images includes the following a1~a3:

a1: identifying a gesture as a first dynamic gesture according to the N frames of first gesture images.

The gesture can be identified as the first dynamic gesture according to the hand key point coordinate corresponding to each of the N frames of first gesture images. In a specific implementation, the gesture is identified as the first dynamic gesture according to the hand key point coordinate corresponding to each of the N frames of first gesture images, which includes: the hand key point coordinate corresponding to each of the N frames of first gesture images are taken as the input of the gesture classification model, and the output is obtained after learning the gesture classification model, which indicates the first dynamic gesture. Where the gesture classification model can be a general gesture classification model at present, such as neural network model.

Where the first dynamic gestures can be: single-finger sliding, two-finger sliding, gradually spreading two fingers, pinching two fingers, and palm sliding.

a2: determining first control information of the first object according to at least part of the gesture images in the N frames of first gesture images.

In the first solution, the first control information of the first object is determined according to a change value of a hand key position corresponding to a second target gesture image relative to a hand key position corresponding to a first target gesture image. Where the first target gesture image and the second target gesture image are last captured two frames of gesture images in the N frames of first gesture images, and the second target gesture image is a latest captured gesture image in the N frames of first gesture images.

The first solution is applicable to the current process of controlling the first object displayed on the electronic device through the first dynamic gesture. Before the first object is controlled according to the N frames of first gesture images, the first object is also controlled at least according to the continuous N frames of third gesture images, where the N frames of first gesture images include part of the gesture images in the N frames of third gesture images, and the capture time of the earliest captured gesture image in the N frames of third gesture images is earlier than the capture time of any one of the N frames of first gesture images. If N = 5, N frames of first gesture images may include four frames of gesture images captured after N consecutive frames of third gesture images and one frame of gesture image captured for the first time after the four frames of gesture images, or, the N frames of first gesture images may also include the last captured three frames of gesture images in the consecutive N frames of third gesture images and the earliest captured two frames of gesture images after the three frames of gesture images.

The first solution is also applicable to the N frames of first gesture images that are the earliest captured N frames of first gesture images in the process of currently controlling the first object displayed on the electronic device through the first dynamic gesture.

The specific implementation of determining the first control information of the first object will be described below.

Where the first control information of the first object is determined according to a change value of a hand key position corresponding to a second target gesture image relative to a hand key position corresponding to a first target gesture image, which may include the following a21~a24 :

a21: for each target hand key point corresponding to the target hand key point of the first dynamic gesture, acquiring a moving distance of the target hand key according to the first coordinate of the target hand key in the second target gesture image and the second coordinate of the target hand key in the first target gesture image.

Generally, 21 hand key points are preset, and the target hand key point may be the hand key point corresponding to the first dynamic gesture in the 21 hand key points. For example, if the dynamic gesture is the single-finger sliding, the key point on the single finger is the target hand key point; and if the dynamic gesture is spreading two fingers, the key point on the two fingers is the target hand key point.

Where if the first coordinate is $(x1, Y1)$ and the second coordinate is $(X2, Y2)$, the moving distance of the target hand key point can be $(x1-x2)^2 + (y1-y2)^2$.

a22: acquiring an average value of the moving distance of each target hand key point.

a23: acquiring a preset multiple.

In this solution, the preset multiples are the same for various dynamic gestures. The preset multiples can be stored in the electronic device.

a24: determining the first control information of the first object according to the preset multiple and the average value of the moving distance of each target hand key point.

When the first control information of the first object includes the first moving distance of the first object, the first control information of the first object is determined according to the average value of the moving distances of the key point of each target hand, which includes: the preset multiple of the average value of the moving distance of the each target hand key points is determined as the first moving distance of the first object.

When the first control information of the first object includes the size change value of the first object, the first control information of the first object is determined according to the average value of the moving distance of the each target hand key point, which includes: the first moving distance is obtained, where the first moving distance is a preset multiple of the average of the moving distance of the each target hand key point; according to the ratio of the first moving distance to the first distance, the size change ratio is obtained. The first distance is half of the diagonal length of the rectangular area corresponding to the first object, and the rectangular area corresponding to the first object is an area for displaying the first object; and the size change value is obtained according to the product of the size change ratio and the current size of the first object.

In a second solution, the first control of the first object is determined according to the change value of the hand key point position corresponding to the second target gesture image relative to the hand key point position corresponding to the first target gesture image and the first dynamic gesture. Where the first target gesture image and the second target gesture image are the last two frames of gesture images captured in the N frames of first gesture images, and the second target gesture image is the latest gesture image captured in the N frames of first gesture images.

The applicable condition of this solution is the same as that of the first solution.

The specific implementation of determining the first control information of the first object will be described below.

The first control of the first object is determined according to the change value of the hand key point position corresponding to the second target gesture image relative to the hand key point position corresponding to the first target gesture image and the first dynamic gesture may include the following a26~a29:

a26: for each target hand key point corresponding to the target hand key point of the first dynamic gesture, acquiring a moving distance of the target hand key according to the first coordinate of the target hand key in the second target gesture image and the second coordinate of the target hand key in the first target gesture image.

For the specific implementation of a26, please refer to the description in a21.

a27: acquiring the average value of the moving distance of the each target hand key points.

For the specific implementation of a27, please refer to the description in a22.

a28: determining the first preset multiple according to the first dynamic gesture.

The electronic device may store preset multiples corresponding to various dynamic gestures. Where the preset multiples of dynamic gestures corresponding to different instructions may be same or different, and the preset multiples of dynamic gestures corresponding to the same instruction are different.

a29: determining the first control information of the first object according to the first preset multiple and the average value of the moving distance of the each target hand key point.

For the specific implementation of a29, please refer to the description in a24, and only need to update the preset multiple in a24 to the first preset multiple. For example, the dynamic gesture of two-finger sliding corresponds to the preset multiple of 1, the dynamic gesture of palm sliding corresponds to the preset multiple of 2, the dynamic gesture of two-finger sliding corresponds to the sliding page, and the dynamic gesture of palm sliding also corresponds to the sliding page. Then, when the preset multiple of 2 is greater than the preset multiple of 1, the speed of the sliding page corresponding to the palm sliding is greater than the speed of the sliding page corresponding to the two-finger sliding. That is, the palm sliding corresponds to fast sliding page, and two-finger sliding corresponds to slowly sliding page.

In a third solution, the first control information of the first object is determined according to the change value of the hand key point position corresponding to the second target gesture image relative to the hand key point position corresponding to the first target gesture image; where the first target gesture image and the second target gesture image are respectively the earliest and latest gesture images captured in the N frames of the first gesture image, and the second target gesture image is the latest gesture image captured in the N frames of first gesture images.

The third solution is applicable to the N frames of gesture images which are the earliest captured N frames of first gesture images in the process of currently controlling the first object displayed on the electronic device through the first dynamic gesture.

According to the above three solutions, the control information for the first object displayed on the electronic device in this embodiment is not preset, but is acquired based on the change of the hand key point position, which makes the control of the first object more refined, more in line with the needs of the user, and improves the user's experience.

a3: executing the first instruction corresponding to the first dynamic gesture according to the first control information of the first object to control the first object.

Where instructions corresponding to multiple dynamic gestures are stored in the electronic device. After recognizing the gesture as the first dynamic gesture and determines the first control information of the first object, the electronic device executes the first instruction corresponding to the first dynamic gesture according to the first control information to control the first object.

In order to make the change of the first object more stable and the control of the first object more stable in the process of controlling the first object, according to the first control information, the first instruction is executed to continue to control the first object, which includes: according to the first control information and a first historical control information, a new control information of the first object is obtained, where the first historical control information is the control information based on which the first object was last controlled in the current control process of the first object; and according to the new control information, the first instruction is executed to control the first object.

According to the first control information and the first historical control information, the new control information of the first object is obtained by the following formula:

$$v_n = [\alpha v_{n-1} + (1-\alpha)s_n]/(1-\alpha^n); \qquad (1)$$

Where $V_0 = 0$, $n \geq 1$, $s_n$ corresponds to the first control information, $v_n$ corresponds to the new control information, and $v_{n-1}$ corresponds to the first historical control information.

Step S202, acquiring at least one frame of gesture image, where the at least one frame of gesture image and part of the gesture images in the N frames of first gesture images constitute continuous N frames of second gesture images, and the acquiring time of at least one frame of gesture image is after the acquiring time of the N frames of first gesture images.

At least one frame of gesture image is the earliest one frame or more frames of gesture images captured after the electronic device captures N frames of first gesture images. At least one frame of gesture image and part of the N frames of first gesture images constitute continuous N frames of first gesture images.

In one specific implementation, at least one frame of gesture image is a one frame of gesture image. That is to say, every time a new frame of gesture image is captured, it is convenient for the previously captured gesture image to constitute continuous multi frames of gesture images, such as N frames of first gesture images and N frames of the second gestures as described above.

Exemplarily, N=5, where the N frames of first gesture images are the second to sixth frames of gesture images sequentially acquired during the current control process of the first object, at least one frame of gesture image is the seventh frame of gesture image, and the N frames of second gesture images are the third to seventh frames of gesture images sequentially acquired during the current control process of the first object.

In another specific implementation, at least one frame of gesture image is two frames of gesture images.

Exemplarily, N=5, where the N frames of first gesture images are the second to sixth frames of gesture images sequentially acquired during the current control process of the first object, at least one frame of gesture image is the seventh and eighth frames of gesture images, and the N frames of second gesture images are the fourth to eighth frames of gesture images sequentially acquired during the current control process of the first object.

Step S203: Continuing to control the first object displayed on the screen according to the N frames of second gesture images.

The specific implementation of controlling the first object displayed on the screen according to the N frames of second gesture images will be described below.

In a specific implementation, controlling the first object displayed on the control screen according to the N frames of second gesture images includes the following b1 to b4:

b1: identifying the gesture as the first dynamic gesture according to the N frames of second gesture images.

Where for the specific implementation of b1, please refer to the specific implementation in a1, which will not be repeated here.

b2: determining the second control information of the first object according to part of the gesture images in the N frames of gesture images of second gesture images.

Where, for the specific implementation of b2, please refer to the specific implementation of the first and second solutions of "determining the first control information of the first object according to the at least part of gesture images in the N frames of first gesture images" in a2, which will not be repeated here.

b3: executing the first instruction according to the second control information of the first object to continue to control the first object.

Where the specific implementation of b3 refers to the specific implementation in a3, which will not be repeated here.

It is understandable that, in this embodiment, in the process that the user currently controls the first object displayed by the electronic device through the first dynamic gesture, the first object can be continuously controlled multiple times. Steps S201 to S203 are any adjacent two control methods in the continuous multiple control of the first object. For example, in the case of N=5, in the process that the user currently controls the first object displayed by the electronic device through the first dynamic gesture, the electronic device recognizes the gesture as the first dynamic gesture according to the first five frames of gesture images, acquires control information according to the change of the hand key point position corresponding to the fifth frame of gesture image relative to the hand key point position corresponding to the fourth frame of gesture image and controls the first object according to the control information or recognizes the gesture as the first dynamic gesture according to the first five frames of gesture images, obtains the first control information according to the change of the hand key point position corresponding to the fifth frame of gesture image relative to the hand key point position corresponding to the first frame of gesture image, and controls the first object according to the control information. Secondly, the gesture is recognized as the first dynamic gesture according to the second to sixth frames of gesture images, and the control information is obtained according to the change of the hand key point position corresponding to the sixth frame of gesture image relative to the hand key point position corresponding to the fifth frame of gesture image, and the first object is controlled according to the control information. And then the gesture is recognized as the first dynamic gesture according to the third to seventh frames of gesture images, and the control information is obtained according to the change of the hand key point position corresponding to the seventh frame of gesture image relative to the hand key point position corresponding to the sixth frame of gesture image, and the first object is controlled according to the control information, and so on, until the gesture is recognized as the first dynamic gesture according to the last five frames of gesture images, and the control information is obtained according to the change of the hand key point position corresponding to the last frame of gesture image relative to the hand key point position corresponding to the second-to-last frame of gesture image and the first object is controlled according to the control information.

In the method of this embodiment, in a current process of controlling the electronic device through dynamic gestures, the first object is controlled once after a small number of gesture images are captured, and the gesture images based on which the first object is controlled in two adjacent times have a same gesture image, which achieves the purpose of finely controlling the electronic device through dynamic gestures

The following describes the control methods of electronic devices corresponding to several specific dynamic gesture scenarios.

Firstly, the control method of the electronic device corresponding to the scene where the dynamic gesture is single-finger sliding to the first direction is described. The first direction in the present application can be any direction, such as up, down, left, right, etc.

When the user currently controls the first object on the electronic device by single-finger sliding to the first direction, and the first object is a positioning mark:

the electronic device recognizes the gesture as single-finger sliding to the first direction according to the captured first five frames of the gesture images, obtains the first moving distance of the positioning mark according to the product of the moving distance of the target hand key point position in the fifth frame of gesture image relative to the target key point in the fourth frame of gesture image and the first preset multiple, and then controls the positioning mark to move in the first direction by a first moving distance.

The electronic device composes the captured the sixth frame of gesture image and the second to fifth frames of gesture images to form a continuous five frames of images, recognizes the gesture as single-finger sliding to the first direction according to the second to sixth frames of gesture images, obtains the second moving distance of the positioning mark according to the average moving distance of the target hand key point position in the sixth frame of gesture image relative to the target key point in the fifth frame of gesture image and the first preset multiple, and then controls the positioning mark to move in the first direction by a second moving distance.

The electronic device composes the captured the seventh frame of gesture image and the third to sixth frames of gesture images to form a continuous five frames of images, recognizes the gesture as single-finger sliding to the first direction according to the third to seventh frames of gesture images, obtains the third moving distance of the positioning mark according to the average moving distance of the target hand key point position corresponding to the seventh frame of gesture image relative to the target key point in the gesture image of the sixth frame and the first preset multiple, and then the controls the positioning mark to move in the first direction by a third moving distance.

By analogy, when capturing a total of fifty frames of gesture images, until the gesture is recognized as single-finger sliding to the first direction according to the forty-sixth to fiftieth frames of the gesture images, the electronic device obtains the fourth moving distance of the positioning mark according to the average moving distance of the target hand key point position in the fiftieth frame of gesture image relative to the target key point in the forty-ninth frame of gesture image and the first preset multiple, and then controls the positioning mark to move in the first direction by a fourth moving distance.

Where the positioning mark in this embodiment may be a mouse arrow, or it may be a positioning mark displayed when the gesture being single-finger sliding to the first direction is firstly recognized during the current process of controlling the first object by the user, such as a cursor or an arrow.

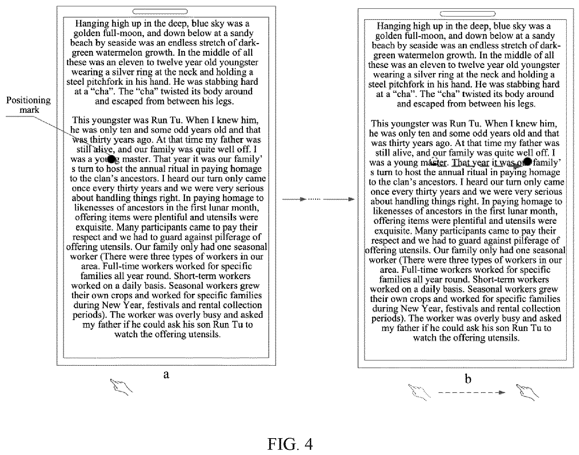

The interface interaction schematic diagram corresponding to this embodiment may be as shown in FIG. 4. Referring to FIG. 4, the hand is actually located in front of the screen. For clarity of illustration, the hand is drawn below the mobile phone. The hand gradually slides from the position in figure (a) to the position in figure (b) in FIG. 4, that is, slides with one finger to the right, and the positioning mark gradually slides from the position in figure (a) to the position in figure (b) in FIG. 4.

The method in this embodiment can finely control the movement of the positioning mark by single-finger sliding to the right.

Secondly, the control method of the electronic device corresponding to the scene where the dynamic gesture is two-finger sliding to the first direction is described.

When the user currently controls the first object on the electronic device by the two-finger sliding to the first direction, the first object is the first page currently displayed.

The electronic device recognizes the gesture as two-finger sliding to the first direction according to the captured first six frames of the gesture images.

The electronic device composes the captured seventh frame of gesture image and the second to sixth frames of gesture images to form a continuous six frames of images, recognizes the gesture as two-finger sliding to the first direction according to the second to seventh frames of gesture images, obtains the first moving distance of the first page according to the average moving distance of the target hand key point position in the seventh frame of gesture image relative to the target key point in the sixth frame of gesture image and the second preset multiple, , and controls the first page to move in the first direction by a first moving distance. The first preset multiple and the second preset multiple may be the same or different.

The electronic device composes the captured the eighth frame of gesture image and the third to seventh frames of gesture images to form a continuous six frames of images, recognizes the gesture as two-finger sliding to the first direction according to the third to eighth frames of gesture images, obtains the second moving distance of the first page according to the average moving distance of the target hand key point position in the eighth frame of gesture image relative to the target key point in the seventh frame of gesture image and the second preset multiple, and controls the first page to move in the first direction by a second moving distance.

By analogy, when capturing a total of sixty frames of gesture images, until the gesture is recognized as a two-finger sliding to the first direction according to the fifty-fifth to sixtieth frames of the gesture images, the electronic device obtains the third moving distance of the first page according to the average moving distance of the target hand key point position in the sixtieth frame of gesture image relative to the target key point in the fifty-ninth frame of gesture image and, and then controls the first page to move in the first direction by the third moving distance.

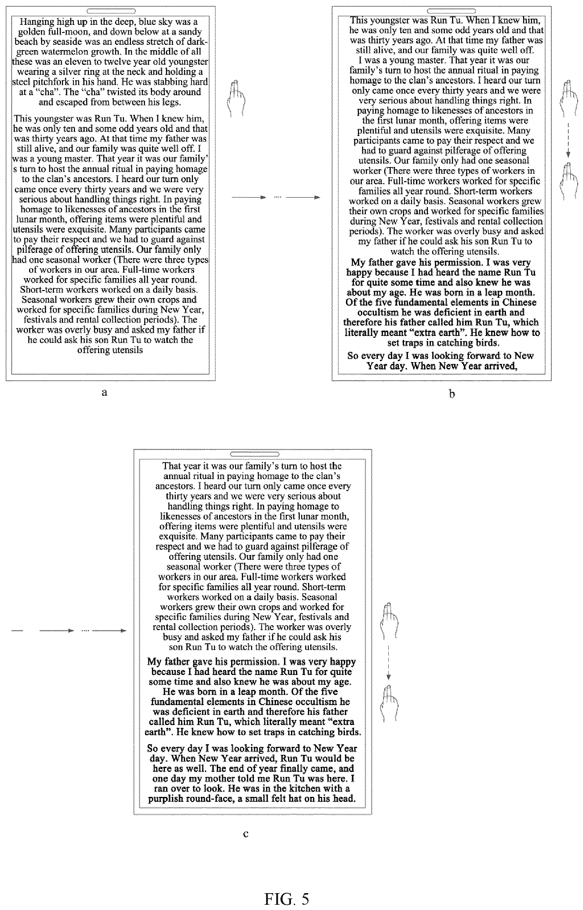

The interface interaction schematic diagram corresponding to this embodiment may be as shown in FIG. 5. Referring to FIG. 5, the hand is actually located in front of the screen. For clarity of illustration, the hand is drawn on the right side of the mobile phone. By sliding down with two fingers and gradually sliding the hand from the position in figure (a) to the position in figure (b) in FIG.5, the currently displayed page slides down accordingly, and the content displayed on the page is updated from the content displayed in figure (a) to the content displayed in Figure (b) in FIG.5. Continue to slide down with two fingers, and gradually slide the hand from the position figure (b) to the position in figure (c) in FIG.5, the currently displayed page slides down accordingly, and the content displayed on the page is updated from the content shown in figure (b) to the content shown in figure (c) in FIG. 5.

Where, in figures (b) and (c), the bold content is the content newly displayed on the page due to the page sliding down. It is understandable that the bold content newly displayed on the page in figures (b) and (c) is to indicate the content newly displayed after the page slides down. In the actual process, the specific display form of the newly displayed content after the page slides down is not limited in this embodiment.

This embodiment achieves the purpose of fine control of the page movement through the dynamic gesture of two-finger sliding.

Next, the control method of the electronic device corresponding to the scene where the dynamic gesture is the palm sliding to the first direction is described.

When the user currently controls the first object on the electronic device by sliding the palm to the first direction, and the first object is the currently displayed first page:

the electronic device recognizes the gesture as the palm sliding to the first direction according to the captured first five frames of the gesture images, obtains the first moving distance of the first page according to the average moving distance of the target hand key point position in the fifth frame of gesture image relative to the target key point in the fourth frame of gesture image and the third preset multiple, and controls the first page to move in the first direction by a first moving distance. The third preset multiple is greater than the second preset multiple.

The electronic device composes the captured the sixth frame of gesture image and the second to fourth frames of gesture images to form continuous five frames of images, recognizes the gesture as a palm sliding to the first direction according to the second to sixth frames of gesture images, obtains the second moving distance of the first page according to the average moving distance of the target hand key point position in the sixth frame of gesture image relative to the target key point in the fifth frame of gesture image and the third preset multiple, and controls the first page to move in the first direction by a second moving distance.

The electronic device composes the captured the seventh frame of gesture image and the third to seventh frames of gesture images to form continuous five frames of images, recognizes the gesture as a palm sliding to the first direction according to the third to seventh frames of gesture images, obtains the third moving distance of the first page according to the average moving distance of the target hand key point position in the seventh frame of gesture image relative to the target key point in the sixth frame of gesture image and the third preset multiple, and controls the first page to move in the first direction by a third moving distance.

By analogy, when capturing a total of fifty frames of gesture images, until the gesture is recognized as a palm sliding to the first direction according to the forty-sixth to fiftieth frames of the gesture images, the electronic device obtains the fourth moving distance of the first page according to the average moving distance of the target hand key point position in the fiftieth frame of gesture image relative to the target key point in the forty-ninth frame of gesture image, and controls the first page to move in the first direction by the fourth moving distance.

According to the method for acquiring the control information of the first object in the embodiment shown in FIG. 2, when the third preset multiple is greater than the second preset multiple, when the moving distance of the target key points in the two adjacent gesture images corresponding to the two-finger sliding and the palm sliding is the same, the movement speed of the first page controlled by the two-finger sliding is slower than that of the first page controlled by the palm sliding. Therefore, if the user wants to move the page quickly, he can make a palm sliding gesture. If the user wants to move the page slowly, he can make a two-finger sliding gesture.

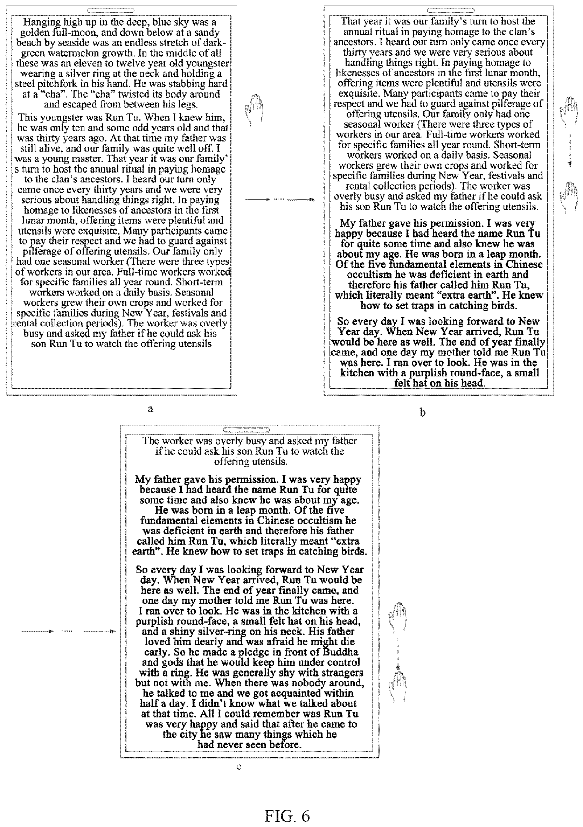

The interface interaction schematic diagram corresponding to the embodiment can be shown in FIG. 6. Referring to FIG 6, the hand is actually in the front of the screen. For the clarity of illustration, the hand is drawn on the right side of the mobile phone. The palm slides downward, and the hand will gradually slide from the position in figure (a) to the position in figure (b) in FIG. 6. The currently displayed page slides down accordingly, and the content displayed on the page is updated from the content displayed in figure (a) to the content displayed in figure (b) in FIG.6. Continue to slide down with a palm, and gradually slide the hand from the position figure (b) to the position in figure (c) in FIG.6. The currently displayed page will slide down accordingly, and the content displayed on the page is updated from the content displayed in figure (b) to the content displayed in figure (c) in FIG.6.

Comparing FIG. 6 and RIG. 5, it can be seen that when the hand moves a similar distance, the page moving speed corresponding to the palm sliding is faster than that corresponding to the two-finger sliding.

This embodiment achieves the purpose of fine control of page movement through the dynamic gesture of palm sliding.

Next, the control method of the electronic device corresponding to the scene where the dynamic gesture is gradually spreading two fingers will be described.

When the user currently controls the first object on the electronic device by gradually spreading two fingers, and the first object is the first picture currently displayed:

the electronic device recognizes the gesture as the two-finger gradually spreading according to the captured first four frames of the gesture images, obtains the first size change value of the first picture according to the average moving distance of the target hand key point position in the fourth frame of gesture image relative to the target key point in the first frame of gesture image and the fourth preset multiple, and controls the current size of the first picture to enlarge the first size change value.

The electronic device composes the captured the fifth frame of gesture image and the second to fourth frames of gesture images to form a continuous four frames of images, recognizes the gesture as two-finger gradually spreading according to the second to fifth frames of gesture images, obtains the second size change value of the first picture according to the average moving distance of the target hand key point position in the fifth frame of gesture image relative to the target key point in the fourth frame of gesture image and the fourth preset multiple, and controls the current size of the first picture to continue to enlarge the second size change value.

The electronic device composes the captured the sixth frame of gesture image and the third to fifth frames of gesture images to form a continuous four frames of images, recognizes the gesture as two-finger gradually spreading according to the third to sixth frames of gesture images, obtains the third size change value of the first picture according to the average moving distance of the target hand key point position in the sixth frame of gesture image relative to the target key point in the fifth frame of gesture image and the fourth preset multiple, and controls the current size of the first picture to continue to enlarge the third size change value..

By analogy, when capturing a total of thirty frames of gesture images, until the gesture is recognized as two-finger gradually spreading to the first direction according to the twenty-seventh to thirtieth frames of the gesture images, the electronic device obtains the fourth size change value of the first picture according to the average moving distance of the target hand key point position in the thirtieth frame of gesture image relative to the target key point in the twenty-ninth frame of gesture image and the fourth preset multiple, and controls the current size of the first picture to continue to enlarge the fourth size change value.

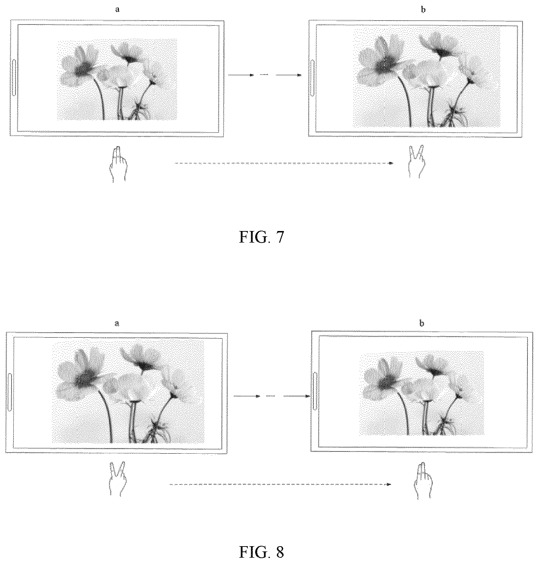

The interface interaction diagram corresponding to this embodiment may be as shown in FIG. 7. Referring to FIG. 7, the hand is actually located in front of the screen. For the clarity of illustration, the hand is drawn below the mobile phone. The gesture in figure (a) in FIG. 7 gradually changes to the gesture in figure (b) in FIG. 7, that is, the two fingers are gradually opened, and the size of the currently displayed picture gradually changes from the size of figure (a) in FIG. 7 to the size of the figure (b) in FIG. 7.

This embodiment achieves the purpose of fine control of picture enlargement through dynamic gestures that gradually spread two fingers.

Next, the control method of the electronic device corresponding to the scene where the dynamic gesture is gradually pinching two fingers is described.

When the user currently controls the first object on the electronic device by gradually pinching two fingers, and the first object is the first picture currently displayed:

the electronic device recognizes the gesture as the two-finger gradually pinching according to the captured first five frames of the gesture images, obtains the first size change value of the first picture according to the average moving distance of the target hand key point position in the fifth frame of gesture image relative to the target key point in the fourth frame of gesture image and the fifth preset multiple, and controls the current size of the first picture to reduce the first size change value.

The electronic device composes the captured the sixth frame of gesture image, the seventh frame of gesture image and the third to fifth frames of gesture images to form continuous five frames of images, recognizes the gesture as two-finger gradually pinching according to the third to seventh frames of gesture images, obtains the second size change value of the first page according to the average moving distance of the target hand key point position in the seventh frame of gesture image relative to the target key point in the sixth frame of gesture image and the fifth preset multiple, and controls the current size of the first picture to continue to reduce the second size change value.

The electronic device composes the captured the eight frame of gesture image, the ninth frame of gesture image and the fifth to seventh frames of gesture images to form continuous five frames of images, recognizes the gesture as two-finger gradually pinching according to the fifth to ninth frames of gesture images, obtains the third size change value of the first page according to the average moving distance of the target hand key point position in the ninth frame of gesture image relative to the target key point in the eighth frame of gesture image and the fifth preset multiple, and controls the current size of the first picture to continue to reduce the third size change value.

By analogy, when capturing a total of fifty frames of gesture images, until the gesture is recognized as two-finger gradually pinching according to the forty-sixth to fiftieth frames of the gesture images, the electronic device obtains the fourth size change value of the first picture according to the average moving distance of the target hand key point position in the fiftieth frame of gesture image relative to the target key point in the forty-ninth frame of gesture image and the fifth preset multiple, and controls the current size of the first picture to continue to reduce the fourth size change value.

The interface interaction schematic diagram corresponding to this embodiment may be as shown in FIG. 8. Referring to FIG. 8, the hand is actually located in front of the screen. For the clarity of illustration, the hand is drawn below the mobile phone. The gesture in figure (a) in FIG. 8 gradually changes to the gesture in figure (b) in FIG. 8, that is, two-finger gradually pinching, and the size of the currently displayed picture gradually changes from the size of figure (a) in FIG. 8 to the size of the figure (b) in FIG. 8.

This embodiment achieves the purpose of fine control of picture enlargement through dynamic gestures that gradually pinching two fingers.

The following uses a specific embodiment to describe the first machine learning model in the previous embodiment.

In the embodiment shown in FIG. 2, the first machine learning model used to identify whether the image is a gesture image and obtain the hand key point position in the gesture image may be a neural network model, such as a convolutional neural network model, a bidirectional neural network model and so on. In one solution, an input of the first machine learning model can be an image with a shape of (256, 256, 3) which is processed by the image captured by the camera; where (256, 256, 3) represents a color picture with a length of 256 pixels, a width of 256 pixels, and the number of channels being RGB three channels. The output of the first machine model can be (anchors, 1+4+21*2), where anchors represent the number of output anchor boxes of the network, 1 represents the probability that this anchor box contains a hand, and 4 represents the coordinates of the bounding box of the hand, specifically, the x and y coordinates of the upper left corner, the x and y coordinates of the lower right corner, and 21*2 represents the coordinates (x, y) of the 21 hand key points.

When training the first machine learning model, a large number of positive sample pictures and negative sample pictures can be acquired, where the positive sample pictures include hands, and the negative sample pictures do not include hands. Manually the label of each sample picture-(anchors, 1+4+21*2) is marked. According to a large number of positive sample pictures and negative sample pictures as well as the label of each sample picture, a supervised training is performed, and finally the first machine learning model can be acquired. In order to ensure the accuracy of the first machine learning model, after the first machine learning model is obtained, the accuracy of the first machine learning model can also be tested by using test pictures. If the accuracy does not meet the preset accuracy, the supervised training is continued until the accuracy meets the preset accuracy.

The network structure corresponding to the first machine learning model may be modified on the basis of the current solid state drive (SSD) network structure, or may be redesigned, which is not limited in this embodiment.

The first machine learning model obtained in this embodiment can improve the efficiency and accuracy of acquiring the hand key point coordinates, thereby can further improve the efficiency of the user's control of the electronic device through gestures.

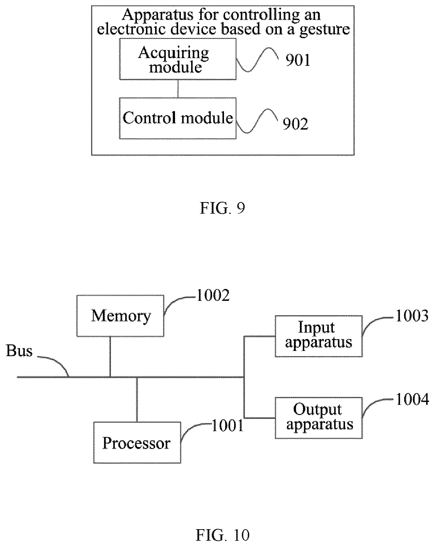

FIG. 9 is a schematic structural diagram of an apparatus for controlling an electronic device based on a gesture provided by an embodiment of the present application. As shown in FIG. 9, the apparatus of this embodiment may include: an acquiring module 901 and a control module 902.

The acquisition module 901 is configured to acquire consecutive N frames of first gesture images; where N is an integer greater than 1; the control module 902 is configured to control the first object displayed on a screen according to the N frames of first gesture images; the acquiring module 901 is further configured to acquire at least one frame of gesture image; where the at least one frame of gesture image and part of the gesture images in the N frames of first gesture images constitute continuous N frames of second gesture images, where acquiring time of the at least one frame of gesture image is after the acquiring time of the N frames of first gesture images; and the control module 902 is further configured to continue to control the first object displayed on the screen according to the N frames of second gesture images.

Optionally, the control module 902 is specifically configured to: identify a gesture as a first dynamic gesture according to the N frames of first gesture images; determine a first control information of the first object according to part of the gesture images in the N frames of first gesture images; and execute a first instruction corresponding to the first dynamic gesture to control the first object according to the first control information.

Optionally, the control module 902 is specifically configured to: determine the first control information according to a change value of a hand key point position corresponding to a second target gesture image relative to a hand key point position corresponding to a first target gesture image; where the second target gesture image is a last acquired gesture image in the N frames of first gesture images, and the first target gesture image is the frame of gesture image acquired most recently before the second target gesture image is acquired..

Optionally, the control module 902 is specifically configured to: determine the first control information according to the change value of the hand key point position corresponding to the second target gesture image relative to the hand key point position corresponding to the first target gesture image and the first dynamic gesture.

Optionally, before the control module 902 determines the first control information according to a change value of a hand key point position corresponding to a second target gesture image relative to a hand key point position corresponding to a first target gesture image, the acquiring module 901 is further configured to: use a first machine learning model to learn the first gesture image; and acquire an output of the first machine learning model, where the output includes a hand key point coordinate corresponding to the first gesture image.

Optionally, the control module 902 is specifically configured to: obtain new control information of the first object according to the first control information and first historical control information, where the first historical control information is control information based on which the first object is last controlled in a current control process of the first object; and execute the first instruction to control the first object according to the new control information.

Optionally, the first control information is a first moving distance.

Optionally, the first dynamic gesture is single-finger sliding to a first direction, the first instruction is moving the first object in the first direction, and the first object is a positioning mark; and the control module 902 is specifically configured to: control the positioning mark to move the first moving distance in the first direction.

Optionally, the first dynamic gesture is two-finger sliding to a first direction, and the first instruction is moving the first object in the first direction, and the first object is the first page; and the control module 902 is specifically configured to: control the first page to move the first moving distance in the first direction.

Optionally, the first dynamic gesture is palm sliding to a first direction, the first instruction is moving the first object in the first direction, and the first object is a first page; and the control module 902 is specifically configured to: control the first page to move the first moving distance in the first direction.

Optionally, the first control information is a size change value.

Optionally, the first dynamic gesture is gradually spreading out two fingers, and the first instruction is enlarging the first object; and the control module 902 is specifically configured to: enlarge a size of the first object by the size change value.

Optionally, the first dynamic gesture is pinching two fingers, and the first instruction is reducing the first object; and the control module 902 is specifically configured to: reduce the size of the first object by the size change value.

The apparatus in this embodiment can be configured to implement the technical solutions of the foregoing method embodiments, and its implementation principles and technical effects are similar, which will not be repeated here.

According to the embodiments of the present application, the present application also provides an electronic device and a readable storage medium.

As shown in FIG. 10, it is a block diagram of an electronic device that implements the method for controlling an electronic device based on a gesture in an embodiment of the present application. Electronic devices are intended to represent various forms of digital computers, such as laptop computers, desktop computers, workstations, personal digital assistants, servers, blade servers, mainframe computers, and other suitable computers. Electronic devices can also represent various forms of mobile devices, such as personal digital processing, cellular phones, smart phones, wearable devices, and other similar computing apparatus. The components shown herein, their connections and relationships, and their functions are merely examples, and are not intended to limit the implementation of the present application described and/or required herein.

As shown in FIG. 10, the electronic device includes: one or more processors 1001, a memory 1002, and interfaces for connecting various components which include high-speed interfaces and low-speed interfaces. The various components are connected to each other by using different buses, and can be installed on a common motherboard or installed in other ways as required. The processor may process instructions executed in the electronic device, which include instructions stored in or on the memory to display graphical information of the GUI on an external input/output apparatus (such as a display device coupled to an interface). In other implementation manners, multiple processors and/or multiple buses may be used with multiple memories if necessary. Similarly, multiple electronic devices can be connected, and each device provides some necessary operations (for example, as a server array, a group of blade servers, or a multi-processor system). In FIG. 10, a processor 1001 is taken as an example.

A memory 1002 is a non-transitory computer-readable storage medium provided by the present application. Where the memory stores instructions executable by at least one processor to cause the at least one processor to execute the method for controlling an electronic device based on a gesture provided in the present application. The non-transitory computer-readable storage medium of the present application stores computer instructions, which are used to cause a computer to execute the method for controlling an electronic device based on a gesture provided in the present application.

The memory 1002, as a non-transitory computer-readable storage medium, can be used to store non-transitory software programs, non-transitory computer executable programs and modules, such as program instructions/modules corresponding to the method of controlling an electronic device based on a gesture in the embodiments of the present application (for example, the acquiring module 901 and the control module 902 shown in FIG. 9). The processor 1001 executes various functional applications and data processing of the electronic device by running non-transitory software programs, instructions, and modules stored in the memory 1002, that is, implements the method of controlling an electronic device based on a gesture in the foregoing method embodiments.

The memory 1002 may include a storage program area and a storage data area, where the storage program area can store an operating system and an application program required by at least one function; and the storage data area can store data created by the use of the electronic device that implements the method of controlling an electronic device based on a gesture, and the like. In addition, the memory 1002 may include a high-speed random-access memory, and may also include a non-transitory memory, such as at least one magnetic disk storage device, a flash memory device, or other non-transitory solid-state storage devices. In some embodiments, the memory 1002 may optionally include memories remotely provided with respect to the processor 1001, these remote memories can be connected to an electronic device that implements a method for controlling an electronic device based on a gesture through a network. Examples of the aforementioned networks include, but are not limited to, the Internet, corporate intranets, local area networks, mobile communication networks, and combinations thereof.

The electronic device implementing the method for controlling an electronic device based on a gesture may further include: an input apparatus 1003 and an output apparatus 1004, the processor 1001, and the memory 1002. The input apparatus 1003 and the output apparatus 1004 may be connected by a bus or other methods. In FIG. 10, the bus connection is taken as an example.

The input apparatus 1003 can receive input digital or character information, and generate key signal input related to the user settings and function control of the electronic device that implements the method of controlling n electronic device based on a gesture, such as a touch screen, a keypad, a mouse, a trackpad, a touchpad, a pointing stick, one or more mouse buttons, a trackball, a joystick and other input apparatuses. The output apparatus 1004 may include a display device, an auxiliary lighting device (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various implementations of the systems and technologies described herein can be implemented in digital electronic circuit systems, integrated circuit systems, ASICs (application specific integrated circuit), computer hardware, firmware, software, and/or combinations thereof. These various embodiments may include: being implemented in one or more computer programs, the one or more computer programs may be executed and/or interpreted on a programmable system including at least one programmable processor, and the programmable processor may be a dedicated or general programmable processor, which can receive data and instructions from a storage system, at least one input apparatus, and at least one output apparatus and transmit the data and instructions to the storage system, the at least one input apparatus, and the at least one output apparatus.

According to the embodiment of the present application, where the present application also provides a computer program product, the program product includes: a computer program, the computer program is stored in a readable storage medium, at least one processor of the electronic device can read the computer program from a readable storage medium, and at least one processor executes the computer program to make the electronic device execute the solution provided by any of the foregoing embodiments.

These computing programs (also called programs, software, software applications, or codes) include machine instructions of a programmable processor, and can use a high-level process and/or an object-oriented programming language, and/or an assembly/machine language to implement these computing programs. As used herein, the terms "machine-readable medium" and "computer-readable medium" refer to any computer program product, device, and/or apparatus used to provide machine instructions and/or data to a programmable processor (for example, a magnetic disk, an optical disk, a memory, a programmable logic device (PLD)), which includes a machine-readable medium that receives machine instructions as machine-readable signals. The term "machine-readable signal" refers to any signal used to provide machine instructions and/or data to a programmable processor.

In order to provide interaction with the user, the systems and techniques described here can be implemented on a computer that has: a display apparatus for displaying information to the user (for example, a CRT (cathode ray tube) or a LCD (liquid crystal display) monitor)); and a keyboard and a pointing apparatus (for example, a mouse or a trackball) through which the user can provide input to the computer. Other types of apparatuses can also be used to provide interaction with the user; for example, the feedback provided to the user can be any form of sensory feedback (for example, visual feedback, auditory feedback, or tactile feedback); and can receive input from the user in any form (including acoustic input, voice input, or tactile input).

The systems and technologies described herein can be implemented in a computing system that includes back-end components (for example, as a data server), or a computing system that includes middleware components (for example, an application server), or a computing system that includes front-end components (for example, a user computer with a graphical user interface or web browser, through which the user can interact with the implementation of the system and technology described herein), or a computing system that includes such back-end components, middleware components, or any combination of the front-end components. The components of the system can be connected to each other through any form or medium of digital data communication (for example, a communication network). Examples of communication networks include: local area network (LAN), wide area network (WAN), and the Internet.

The computer system can include a client and a server. The client and server are generally far away from each other and usually interact through a communication network. The relationship between the client and the server is generated by computer programs that run on the corresponding computer and have a client-server relationship with each other.

In the present application, in a current process of controlling the electronic device through dynamic gestures, the first object is controlled once after a small number of gesture images are captured, and the gesture images based on which the first object is controlled in two adjacent times have a same gesture image, which achieves the purpose of finely controlling the electronic device through dynamic gestures.

It should be understood that the various forms of processes shown above can be used to reorder, add or delete steps. For example, the steps recorded in the present application can be executed in parallel, sequentially, or in a different order, as long as the desired result of the technical solution disclosed in the present application can be achieved, which is not limited herein.

The above specific implementation manners do not constitute a limitation on the protection scope of the present application. Those skilled in the art should understand that various modifications, combinations, sub-combinations, and substitutions can be made according to design requirements and other factors. Any modifications, equivalent replacements and improvements made within the spirit and principles of the present application shall be included in the scope of protection of the present application.

**Claims**

1. A method for controlling an electronic device based on a gesture, comprising:

   acquiring (S201) consecutive N frames of first gesture images, and controlling a first object displayed on a screen according to the N frames of first gesture images, wherein N is an integer greater than 1;
   acquiring (S202) at least one frame of gesture image; wherein the at least one frame of gesture image and part of the gesture images in the N frames of first gesture images constitute continuous N frames of second gesture images, and acquiring time of the at least one frame of gesture image is after the acquiring time of the N frames of first gesture images; and
   continuing (S203) to control the first object displayed on the screen according to the N frames of second gesture images.

2. The method according to claim 1, wherein the controlling (S203) a first object displayed on a screen according to the N frames of first gesture images comprises:

   identifying a gesture as a first dynamic gesture according to the N frames of first gesture images;
   determining first control information of the first object according to part of the gesture images in the N frames of first gesture images; and
   executing a first instruction corresponding to the first dynamic gesture to control the first object according to the first control information.

3. The method according to claim 2, wherein the determining a first control information of the first object according to part of the gesture images in the N frames of first gesture images comprises:

   determining the first control information according to a change value of a hand key point position corresponding to a second target gesture image relative to a hand key point position corresponding to a first target gesture image;
   wherein the second target gesture image is a last acquired gesture image in the N frames of first gesture images, and the first target gesture image is a frame of gesture image acquired most recently before the second target gesture image is acquired; optionally,
   wherein the determining the first control information according to a change value of a hand key point position corresponding to a second target gesture image relative to a hand key point position corresponding to a first target gesture image comprises:
   determining the first control information according to the change value of the hand key point position corresponding to the second target gesture image relative to the hand key point position corresponding to the first target gesture image and the first dynamic gesture.

4.  The method according to claim 3, wherein, before the determining the first control information according to a change value of a hand key point position corresponding to a second target gesture image relative to a hand key point position corresponding to a first target gesture image, the method further comprises:

    using a first machine learning model to learn the first gesture image; and
    acquiring an output of the first machine learning model, wherein the output comprises a hand key point coordinate corresponding to the first gesture image.

5.  The method according to claim 2 or 3, wherein the executing a first instruction corresponding to the first dynamic gesture to control the first object according to the first control information comprises:

    obtaining new control information of the first object according to the first control information and first historical control information, wherein the first historical control information is control information based on which the first object is last controlled in current control process of the first object; and
    executing the first instruction to control the first object according to the new control information.

6.  The method according to claim 2 or 3, wherein the first control information is a first moving distance; optionally, the first dynamic gesture is single-finger sliding to a first direction, the first instruction is moving the first object in the first direction, and the first object is a positioning mark; and
    executing the first instruction to control the first object according to the first control information, comprising: controlling the positioning mark to move the first moving distance in the first direction.

7.  The method according to claim 6, wherein the first dynamic gesture is two-finger sliding to a first direction, the first instruction is moving the first object in the first direction, and the first object is a first page; and
    executing the first instruction to control the first object according to the first control information, comprising: controlling the first page to move the first moving distance in the first direction.

8.  The method according to claim 6, wherein the first dynamic gesture is sliding a palm to a first direction, the first instruction is moving the first object in the first direction, and the first object is a first page; and
    the executing the first instruction to control the first object according to the first control information comprises: controlling the first page to move the first moving distance in the first direction.

9.  The method according to claim 2 or 3, wherein the first control information is a size change value; optionally, the first dynamic gesture is gradually spreading two fingers, and the first instruction is enlarging the first object; and
    the executing the first instruction to control the first object according to the first control information comprises: enlarging a size of the first object by the size change value.

10. The method according to claim 9, wherein the first dynamic gesture is pinching two fingers, and the first instruction is reducing the first object; and
    the executing the first instruction to control the first object according to the first control information comprises: reducing the size of the first object by the size change value.

11. An apparatus for controlling an electronic device based on a gesture, comprising:

    an acquiring module (901), configured to acquire consecutive N frames of first gesture images; wherein N is an integer greater than 1;
    a control module (902), configured to control a first object displayed on a screen according to the N frames of first gesture images;
    the acquiring module (901) is further configured to acquire at least one frame of gesture image; wherein the at least one frame of gesture image and part of the gesture images in the N frames of first gesture images constitute continuous N frames of second gesture images, wherein acquiring time of the at least one frame of gesture image is after the acquiring time of the N frames of first gesture images; and
    the control module (902) is further configured to continue to control the first object displayed on the screen according to the N frames of second gesture images.

12. The apparatus according to claim 11, wherein the control module (902) is specifically configured to:

    identify a gesture as a first dynamic gesture according to the N frames of first gesture images;

determine a first control information of the first object according to part of the gesture images in the N frames of first gesture images; and

execute a first instruction corresponding to the first dynamic gesture to control the first object according to the first control information; optionally,

the control module (902) is specifically configured to:

determine the first control information according to a change value of a hand key point position corresponding to a second target gesture image relative to a hand key point position corresponding to a first target gesture image;

wherein the second target gesture image is a last acquired gesture image in the N frames of first gesture images, and the first target gesture image is the frame of gesture image acquired most recently before the second target gesture image is acquired; optionally,

before the control module (902) determines the first control information according to the change value of the hand key point position corresponding to the second target gesture image relative to the hand key point position corresponding to the first target gesture image, the acquiring module (901) is further configured to:

use a first machine learning model to learn the first gesture image; and

acquire an output of the first machine learning model, wherein the output comprises a hand key point coordinate corresponding to the first gesture image.

13. The apparatus according to claim 12, wherein the control module (902) is specifically configured to:

obtain new control information of the first object according to the first control information and first historical control information, wherein the first historical control information is control information based on which the first object is last controlled in a current control process of the first object; and

execute the first instruction to control the first object according to the new control information.

14. A non-transitory computer-readable storage medium storing computer instructions, wherein the computer instructions are used to cause a computer to execute the method according to any one of claims 1-10.

15. A computer program product, comprising a computer program, when executed by a processor, implements the method according to any one of claims 1-10.

Hanging high up in the deep, blue sky was a golden full-moon, and down below at a sandy beach by seaside was an endless stretch of dark-green watermelon growth. In the middle of all these was an eleven to twelve year old youngster wearing a silver ring at the neck and holding a steel pitchfork in his hand. He was stabbing hard at a "cha". The "cha" twisted its body around and escaped from between his legs.

This youngster was Run Tu. When I knew him, he was only ten and some odd years old and that was thirty years ago. At that time my father was still alive, and our family was quite well off. I was a young master. That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils

a

This youngster was Run Tu. When I knew him, he was only ten and some odd years old and that was thirty years ago. At that time my father was still alive, and our family was quite well off. I was a young master. That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

**My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.**

**So every day I was looking forward to New Year day. When New Year arrived,**

b

That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

**My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.**

**So every day I was looking forward to New Year day. When New Year arrived, Run Tu would be here as well. The end of year finally came, and one day my mother told me Run Tu was here. I ran over to look. He was in the kitchen with a purplish round-face, a small felt hat on his head.**

c

FIG. 1

Acquiring consecutive N frames of first gesture images, and controlling a first object displayed on a screen according to the N frames of first gesture images ⌐S201

Acquiring at least one frame of gesture image, where the at least one frame of gesture image and part of the gesture images in the N frames of first gesture images constitute continuous N frames of second gesture images, and the acquiring time of at least one frame of gesture image is after the acquiring time of the N frames of first gesture images ⌐S202

Continuing to control the first object displayed on the screen according to the N frames of second gesture images ⌐S203

FIG. 2

| Gesture image | Input | First machine learning model | Output | Hand key point |

FIG. 3

Positioning
mark

Hanging high up in the deep, blue sky was a golden full-moon, and down below at a sandy beach by seaside was an endless stretch of dark-green watermelon growth. In the middle of all these was an eleven to twelve year old youngster wearing a silver ring at the neck and holding a steel pitchfork in his hand. He was stabbing hard at a "cha". The "cha" twisted its body around and escaped from between his legs.

This youngster was Run Tu. When I knew him, he was only ten and some odd years old and that was thirty years ago. At that time my father was still alive, and our family was quite well off. I was a young master. That year it was our family' s turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

a

Hanging high up in the deep, blue sky was a golden full-moon, and down below at a sandy beach by seaside was an endless stretch of dark-green watermelon growth. In the middle of all these was an eleven to twelve year old youngster wearing a silver ring at the neck and holding a steel pitchfork in his hand. He was stabbing hard at a "cha". The "cha" twisted its body around and escaped from between his legs.

This youngster was Run Tu. When I knew him, he was only ten and some odd years old and that was thirty years ago. At that time my father was still alive, and our family was quite well off. I was a young master. That year it was our family' s turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

b

FIG. 4

Hanging high up in the deep, blue sky was a golden full-moon, and down below at a sandy beach by seaside was an endless stretch of dark-green watermelon growth. In the middle of all these was an eleven to twelve year old youngster wearing a silver ring at the neck and holding a steel pitchfork in his hand. He was stabbing hard at a "cha". The "cha" twisted its body around and escaped from between his legs.

This youngster was Run Tu. When I knew him, he was only ten and some odd years old and that was thirty years ago. At that time my father was still alive, and our family was quite well off. I was a young master. That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils

a

This youngster was Run Tu. When I knew him, he was only ten and some odd years old and that was thirty years ago. At that time my father was still alive, and our family was quite well off. I was a young master. That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.

So every day I was looking forward to New Year day. When New Year arrived,

b

That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.

So every day I was looking forward to New Year day. When New Year arrived, Run Tu would be here as well. The end of year finally came, and one day my mother told me Run Tu was here. I ran over to look. He was in the kitchen with a purplish round-face, a small felt hat on his head.

c

FIG. 5

Hanging high up in the deep, blue sky was a golden full-moon, and down below at a sandy beach by seaside was an endless stretch of dark-green watermelon growth. In the middle of all these was an eleven to twelve year old youngster wearing a silver ring at the neck and holding a steel pitchfork in his hand. He was stabbing hard at a "cha". The "cha" twisted its body around and escaped from between his legs.

This youngster was Run Tu. When I knew him, he was only ten and some odd years old and that was thirty years ago. At that time my father was still alive, and our family was quite well off. I was a young master. That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils

a

That year it was our family's turn to host the annual ritual in paying homage to the clan's ancestors. I heard our turn only came once every thirty years and we were very serious about handling things right. In paying homage to likenesses of ancestors in the first lunar month, offering items were plentiful and utensils were exquisite. Many participants came to pay their respect and we had to guard against pilferage of offering utensils. Our family only had one seasonal worker (There were three types of workers in our area. Full-time workers worked for specific families all year round. Short-term workers worked on a daily basis. Seasonal workers grew their own crops and worked for specific families during New Year, festivals and rental collection periods). The worker was overly busy and asked my father if he could ask his son Run Tu to watch the offering utensils.

**My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.**

**So every day I was looking forward to New Year day. When New Year arrived, Run Tu would be here as well. The end of year finally came, and one day my mother told me Run Tu was here. I ran over to look. He was in the kitchen with a purplish round-face, a small felt hat on his head.**

b

The worker was overly busy and asked my father if he could ask his son Run Tu to watch the offering utensils.

**My father gave his permission. I was very happy because I had heard the name Run Tu for quite some time and also knew he was about my age. He was born in a leap month. Of the five fundamental elements in Chinese occultism he was deficient in earth and therefore his father called him Run Tu, which literally meant "extra earth". He knew how to set traps in catching birds.**

**So every day I was looking forward to New Year day. When New Year arrived, Run Tu would be here as well. The end of year finally came, and one day my mother told me Run Tu was here. I ran over to look. He was in the kitchen with a purplish round-face, a small felt hat on his head, and a shiny silver-ring on his neck. His father loved him dearly and was afraid he might die early. So he made a pledge in front of Buddha and gods that he would keep him under control with a ring. He was generally shy with strangers but not with me. When there was nobody around, he talked to me and we got acquainted within half a day. I didn't know what we talked about at that time. All I could remember was Run Tu was very happy and said that after he came to the city he saw many things which he had never seen before.**

c

FIG. 6

FIG. 7

FIG. 8

Apparatus for controlling an
electronic device based on a gesture

Acquiring module — 901

Control module — 902

FIG. 9

Memory — 1002

Input apparatus — 1003

Bus

Output apparatus — 1004

Processor — 1001

FIG. 10